# EUROPÄISCHE PATENTSCHRIFT

(11) **EP 0 956 752 B1**
(45) Veröffentlichungstag und Bekanntmachung des Hinweises auf die Patenterteilung: **26.06.2002**
(21) Anmeldenummer: 99107488.1
(22) Anmeldetag: 29.04.1999
(51) Int. Cl.: A01B 29/04

(54) **"Walzenring für Stern- oder Packersternwalzen"**
Star or packer roller ring
Anneau pour rouleau en étoile ou de compactage

(30) Priorität: 05.05.1998 DE 19819907
(43) Veröffentlichungstag der Anmeldung: 17.11.1999
(73) Patentinhaber: Güttler, Fritz, D-73235 Weilheim (DE)
(72) Erfinder: Güttler, Fritz, D-73235 Weilheim (DE)
(74) Vertreter: Patentanwälte Ruff, Wilhelm, Beier, Dauster & Partner

(56) Entgegenhaltungen:
- EP-A- 0 676 124
- DE-A- 19 547 038
- DE-C- 163 684
- DE-C- 366 294

## Beschreibung

Die Erfindung betrifft einen Walzenring gemäß Oberbegriff des Anspruchs 1.

Walzenringe dieser Art sind aus der DE 27 47 535 C2, EP-A-676124 oder aus der DE 42 22 141 C1 bekannt. Aus solchen Walzenringen aufgebaute Ackerwalzen haben sich in der Praxis bewährt. Sie werden aus Graugruß und auch aus Spezialkunststoffen hergestellt.

Bei Walzenringen dieser Art, insbesondere wenn sie aus Kunststoff hergestellt sind, kann es bei Einsatz auf rauhen und steinigen Böden zu Absplitterungen an den Zackenspitzen oder auch zu Spitzenabscherungen kommen, die zwar nicht funktionsmindernd, aber unerwünscht sind.

Der vorliegenden Erfindung liegt daher die Aufgabe zugrunde, Walzenringe der eingangs genannten Art so auszubilden, daß solche Absplitterungen oder Abscherungen nicht auftreten.

Zur Lösung werden bei einem Walzenring der eingangs genannten Art die kennzeichnenden Merkmale des Anspruchs 1 vorgeschlagen. Durch diese Ausgestaltung ergibt sich eine Abstützung der Zackenspitzen und -kanten, die ausreicht, um die als nachteilig angesehenen Absplitterungen und Abscherungen zu vermeiden. Dennoch wird aber die Funktion der Walzenringe, die durch die Zackenausbildung einerseits und andererseits durch die pultdachförmige Neigung nach einer Seite hin bedingt ist, nicht beeinträchtigt.

In Weiterbildung der Erfindung kann bei Walzenringen, bei denen die Zackenanordnung in der Art eines Zahnkranzes am Umfang einer scheibenförmigen und von einer Nabe ausgehenden Tragwand angeordnet ist, auch die zweite Zackenanordnung als ein Zahnkranz ausgebildet sein, der die Tragwand axial überragt. Diese Ausgestaltung zeichnet sich durch ein besonders leichtes Gewicht aus.

Es ist schließlich aber auch möglich, bei einem Walzenring, bei dem die Zackenanordnung auf einer scheibenförmigen und von einer Nabe ausgehenden Tragwand angeordnet ist, die zweite Zackenanordnung in einer Ebene enden zu lassen, durch die auch die Tragwand einseitig begrenzt ist. Diese Ausgestaltung ergibt eine etwas massivere und auch schwerere Walzenringausführung.

Die Erfindung ist anhand von Ausführungsbeispielen in den Zeichnungen dargestellt und wird im folgenden erläutert. Es zeigen:
- Fig. 1: eine Stirnansicht eines Walzenringes nach der Erfindung, bei dem jeweils die Flanken zwischen den einzelnen Graten der Zacken einen ausgerundeten Talgrund bilden,
- Fig. 2: die Seitenansicht des Walzenringes der Fig. 1,
- Fig. 3: einen Längsschnitt durch den Walzenring der Fig. 1 und 2,
- Fig. 4: einen Längsschnitt durch einen Walzenring nach der Erfindung, jedoch bei einer abgewandelten Ausführungsform,
- Fig. 5: die Stirnansicht eines Walzenringes ähnlich Fig. 1 mit ausgerundeten Tälern zwischen den Zackengraten und
- Fig. 6: die Stirnansicht eines Walzenringes, bei dem jedoch die Flanken zwischen den einzelnen Zacken geradflächig verlaufen.

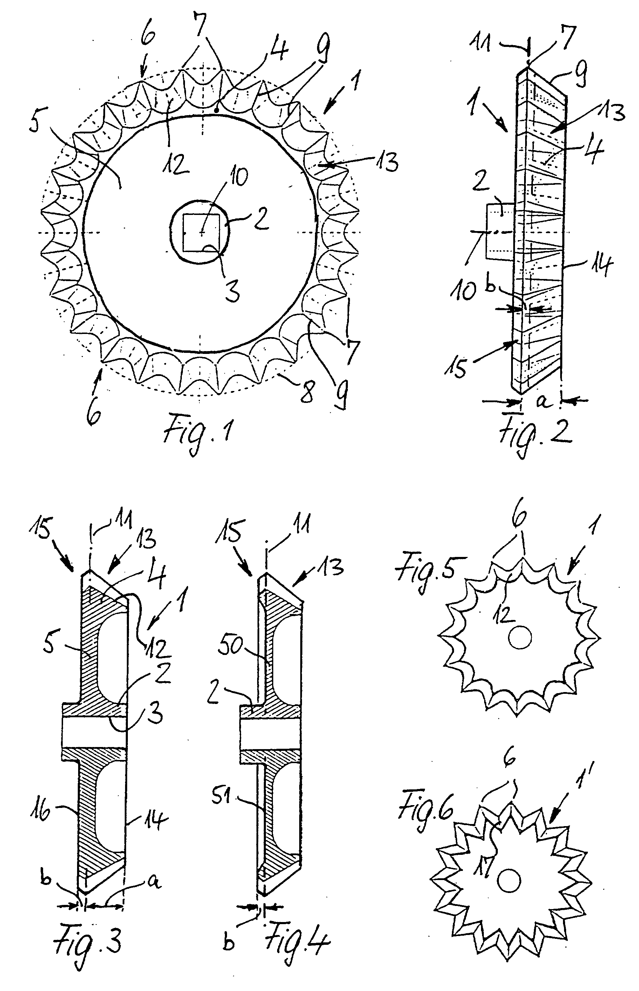

Die Fig. 1 bis 3 zeigen einen Walzenring 1, der eine Nabe 2 mit einer Öffnung 3 zum Aufsetzen auf eine Achse und eine von dieser Nabe 2 ausgehende Tragwand 5 aufweist, die einen außen sitzenden Zahnkranz 4 abstützt. Die Fig. 1 bis 3 zeigen, daß dieser Zahnkranz 4 aus mehreren gleichmäßig auf dem Umfang verteilten Zacken 6 besteht, deren Spitzen 7 auf einem gemeinsamen Umkreisdurchmesser 8 und in einer senkrecht zur Achse 10 des Walzenringes 1 liegenden Ebene 11 liegen. Von dieser Ebene 11 aus fallen die Grate 9 der Zacken 6 pultdachförmig nach einer Seite hin ab. Die von diesen Graten 9 ausgehenden Flanken bilden ausgerundete Täler 12 zwischen den einzelnen Zacken 6.

Wie die Fig. 2 und 3 zeigen, entspricht die axiale Länge dieser ersten Zackenanordnung 13, die von den Spitzen 7, den Graten 9 und den dazwischenliegenden Tälern 12 gebildet ist, zwischen der Ebene 11 und dem äußeren Stirnende 14 dem Maß a.

Von der Ebene 11 aus erstreckt sich nun nach der von der Zakkenanordnung 13 abgewandten Seite hin eine zweite Zackenanordnung 15, die mit der Zackenanordnung 13 jeweils die Spitzen 7 gemeinsam hat und die auch spiegelsymmetrisch zu der Ausbildung der Grate und der dazwischenliegenden Täler 12 der ersten Zackenanordnung 13 ist, aber nur eine axiale Ausdehnung b hat, die nur einem Bruchteil der axialen Länge a der ersten Zackenanordnung 13 entspricht. Spiegelsymmetrie herrscht daher zwischen den beiden Zackenanordnungen nur in einem Bereich, der sich von der Ebene 11 aus jeweils um den Betrag b nach beiden Seiten hin erstreckt. Die Zackenanordnung 15 bildet daher nur eine Art Abstützung für die Spitzen 7 und die in der Ebene 11 endenden Kanten der Flanken. Sie beeinträchtigt die bekannte Funktion der pultdachförmig nach einer Seite abfallenden Zackenanordnung nicht. Beim Ausführungsbeispiel beträgt die axiale Länge b etwa nur 1/6 des Betrages a. Sie kann allerdings maximal bis 30 % % dieser Länge betragen, ohne eine Funktionsbeeinträchtigung mit sich zu bringen.

Wie bekannt, war ein Vorteil der pultdachförmig nach einer Seite abfallenden Zackenanordnung, daß sich der zu bearbeitende Boden nicht an den Zacken oder Graten aufbaut und so die Funktion der Zacken beeinträchtigt. Die axiale Länge b der Zackenanordnung 15 ist zu klein, um einen Bodenaufbau im Bereich der Zackenspitzen 7 zu bewirken. Die gewählten Abmessungen für die zweite Zackenanordnung 15 gewährleisten daher die gleiche Funktion des Walzenringes, wie bei den bekannten Bauarten.

Während in den Fig. 1 bis 3 ein Walzenring 1 gezeigt ist, bei dem die Tragwand 5 mit der Stirnwand 16 endet, die ebenfalls um den Betrag b aus der Ebene 11 heraus entgegengesetzt zu der axialen Länge a verdickt ist, zeigt die Fig. 4 nun eine Ausführungsform, bei der die Tragwand 5 eine Dicke beibehalten hat, wie sie auch bei bekannten Walzenringen vorgesehen war. Die Zackenanordnung 15 ist daher hier ebenfalls in der Art eines Zahnkranzes ausgebildet, der wie die Zackenanordnung 13 axial über die Endwand 51 der Tragwand 50 - um den Betrag b - nach außen vorsteht. Diese Ausführungsform erlaubt die Verwirklichung geringerer Gewichte.

Die Fig. 5 und 6 machen schließlich noch einmal deutlich, daß die erfindungsgemäße Ausgestaltung nicht nur bei Zackenanordnungen 13 in der Art einer Verzahnung mit ausgerundeten Tälern 12 zwischen den einzelnen Zacken 6 vorgesehen sein kann, sondern auch bei Walzenringen 1', deren Zacken 6 gerade Flanken und daher auch einen durch eine Gerade 17 gebildeten Talgrund aufweisen. Solche Walzenringe sind aus der DE 27 47 535 C2 bekannt. Auch hier läßt sich natürlich eine zweite Zackenanordnung 15 vorsehen, um auch hier die Nachteile der Kantenoder Spitzenabsplitterung oder Abscherung zu vermeiden.

## Patentansprüche

1. Walzenring für Stern- oder Packersternwalzen zur Festigung landwirtschaftlicher Böden und zur Schollenzertrümmerung, der mit mehreren gleichen Walzenringen auf einer Achse angeordnet wird und mit einer Zackenanordnung (13) versehen ist, deren Spitzen (7) gleichmäßig auf dem Umfang verteilt und in einer senkrecht zur Achse stehenden Ebene (11) auf einem gemeinsamen Umkreisdurchmesser liegen, **dadurch gekennzeichnet, dass** die Zackenanordnung aus einem ersten Teil (13) besteht, bei dem die Grate (9) der Zacken und die von diesen ausgehenden Flanken über die axiale Länge des ersten Teiles pultdachförmig von der senkrecht zur Achse (10) stehenden Ebene (11) nach einer Seite abstehen, sowie aus einem zweiten Teil (15), der mit dem ersten Teil (13) die Spitzen (7) gemeinsam hat und spiegelsymmetrisch zu der senkrecht zur Achse stehenden Ebene (11) ausgebildet ist, dessen axiale Ausdehnung (b) jedoch kleiner als 30%, oder maximal bis 30%, der axialen Länge (a) des ersten Teiles (13) der Zackenanordnung ist.

2. Walzenring nach Anspruch 1 mit einer in der senkrecht zur Achse stehenden Ebene (11) endenden scheibenförmigen Tragwand (50), die von einer Nabe (2) ausgeht, **dadurch gekennzeichnet, daß** die zweite Zackenanordnung (15) in der Art eines Zahnkranzes ausgebildet ist, der die Tragwand (50) axial überragt.

3. Walzenring nach Anspruch 1, mit einer die Zackenanordnungen (13 und 15) haltenden scheibenartigen Tragwand (5), die von einer Nabe (2) ausgeht, **dadurch gekennzeichnet, daß** die zweite Zackenanordnung (15) in einer Ebene (16) endet, durch die auch die Tragwand (5) einseitig begrenzt ist.

## Claims

1. Rolling ring for star or packer star rollers for firming agricultural soils and for breaking up lumps of earth, which is disposed on a shaft with a plurality of identical rolling rings and is provided with a tooth arrangement (13), the tips (7) of which are uniformly distributed around the circumference and lie in a plane (11) standing perpendicular to the shaft on a common circum-diameter, **characterised in that** the tooth arrangement consists of a first part (13), in which the edges (9) of the teeth and the flanks extending out from them stand out from the plane (11) standing perpendicular to the shaft (10) beyond the axial length of the first part in a pitch roof design tailing off to one side, and a second part (15) which has common tips (7) with the first part (13) and is symmetrical in mirror image relative to the plane (11) standing perpendicular to the shaft, but the axial extension (b) thereof is less than 30% of or a maximum of 30% of the axial length (a) of the first part (13) of the tooth arrangement.

2. Rolling ring as claimed in claim 1, having a disc-shaped supporting wall (50) extending out from a hub (2) and terminating in a plane (11) standing perpendicular to the shaft, **characterised in that** the second tooth arrangement (15) is provided in the form of a ring gear projecting axially beyond the supporting wall (5).

3. Rolling ring as claimed in claim 1, having a supporting wall (5) extending out from a hub (2) and retaining the tooth arrangements (13 and 15), **characterised in that** the second tooth arrangement (15) terminates in a plane (16) which also delimits one side of the supporting wall (5).

## Revendications

1. Anneau pour rouleaux en étoile ou rouleaux en étoile de compactage pour la consolidation de terres agricoles et pour la désagrégation de mottes, qui est disposé avec plusieurs anneaux identiques de rouleau sur un axe et est équipé d'un dispositif à dents (13), dont les pointes (7) sont réparties uniformément sur la périphérie et sont situées dans un plan (11) perpendiculaire à l'axe, sur un diamètre commun, **caractérisé en ce que** le dispositif à dents est constitué par une première partie (13), dans laquelle les arêtes (9) des dents et les flancs, qui partent de ces arêtes, font saillie d'un côté, sur la longueur axiale de la première partie, sous la forme d'un toit à une pente à partir du plan (11) perpendiculaire à l'axe (10), ainsi que par une seconde partie (15), qui a en commun les pointes (7) avec la première partie (13) et est agencée symétriquement par rapport au plan (11) perpendiculaire à l'axe mais dont l'étendue axiale (b) est inférieure à 30 % ou au maximum à 30 % de la longueur axiale (a) de la première partie (13) du dispositif à dents.

2. Anneau pour rouleau selon la revendication 1 comportant une paroi de support (50) en forme de disque, qui se termine dans le plan (11) perpendiculairement à l'axe et qui part d'un moyeu (2), **caractérisé en ce que** le second dispositif à dents (15) est agencé à la manière d'une couronne dentée, qui fait saillie axialement par rapport à la paroi de support (50).

3. Anneau pour rouleau selon la revendication 1, comportant une paroi de support en forme de disque (5), qui retient les dispositifs à dents (13 et 15) et qui s'étend à partir d'un moyeu (2), **caractérisé en ce que** le second dispositif à dents (15) se termine dans un plan (16), qui limite également d'un côté la paroi de support (5).
